**Europäisches Patentamt**

**European Patent Office**

**Office européen des brevets**

(11) Veröffentlichungsnummer: **0 244 856**
**B1**

(12) # EUROPÄISCHE PATENTSCHRIFT

(45) Veröffentlichungstag der Patentschrift:
**07.11.90**

(51) Int. Cl.⁵: **C08L 69/00**
// (C08L69/00, 51:00)

(21) Anmeldenummer: **87106594.2**

(22) Anmeldetag: **07.05.87**

(54) Thermoplastische Formmasse auf Basis von Polycarbonat, ASA und Vinylaromaten/AN enthaltenden Copolymerisaten.

(30) Priorität: **09.05.86 DE 3615607**

(43) Veröffentlichungstag der Anmeldung:
**11.11.87 Patentblatt 87/46**

(45) Bekanntmachung des Hinweises auf die Patenterteilung:
**07.11.90 Patentblatt 90/45**

(84) Benannte Vertragsstaaten:
**BE DE FR GB NL**

(56) Entgegenhaltungen:
**EP-A- 0 096 301**
**EP-A- 0 135 801**
**US-A- 4 560 725**

(73) Patentinhaber: **BASF Aktiengesellschaft,
Carl-Bosch-Strasse 38, D-6700 Ludwigshafen(DE)**

(72) Erfinder: **Wassmuth, Georg, Dr.,
Von-Sturmfeder-Strasse 60, D-6700 Ludwigshafen(DE)**
Erfinder: **Ruppmich, Karl, Koenigsbacher Strasse 134,
D-6700 Ludwigshafen(DE)**
Erfinder: **Seiler, Erhard, Dr., Erpolzheimer Strasse 1,
D-6700 Ludwigshafen(DE)**
Erfinder: **Gausepohl, Hermann, Dr., Neuweg 10,
D-6704 Mutterstadt(DE)**
Erfinder: **Benker, Klaus, Fuerstenweg 52,
D-6730 Neustadt(DE)**

## Beschreibung

Die Erfindung betrifft eine Formmasse auf der Grundlage von Polycarbonaten, ASA- und Copolymerisaten, die Vinylaromaten und Acrylnitril enthalten. Solche Formmassen sind z.B. bekannt aus folgenden Druckschriften: (1) DE-PS 1 170 141, (2) DE-PS 1 810 993, (3) DE-AS 2 037 419, (4) DE-PS 2 259 564, (5) DE-OS 3 149 358, (6) DE-OS 3 210 284, (7) DE-OS 3 245 292 und (8) DE-OS 3 414 118. Außerdem ist die EP-A 96 301 (9) zu nennen.

Mischungen von Styrol- und Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Häufig wird aber eine höhere Zähigkeit, eine höhere Wärmeformbeständigkeit, vor allem aber eine verbesserte Witterungsbeständigkeit angestrebt. In (3), (4) und (6) werden deshalb zur Verbesserung der Beständigkeit gegen Licht und Wärme Formmassen beschrieben, die aus Polycarbonaten und ASA-Polymerisaten aufgebaut sind. Die 2-stufige Pfropfung von ASA-Polymerisaten ist in (5) beschrieben. In (7) ist eine Abmischung aus Polycarbonaten und ASA beschrieben, wobei die Pfropfhülle des Mischpolymerisates 2-stufig aufgebaut ist. Eine weitere Verbesserung ergibt sich nach (8) durch einen dreistufigen Aufbau der Pfropfhülle des Mischpolymerisats, wobei in der ersten Stufe im wesentlichen Styrol, in der zweiten Stufe ein Gemisch aus Styrol mit Acrylnitril und in der dritten Stufe Methylmethacrylat auf einen vernetzten Kautschuk aufgepfropft wird. Häufig genügt bei diesen Formmassen die Zähigkeit und Wärmeformbeständigkeit nicht den ständig steigenden Ansprüchen, insbesondere aber ist die Verarbeitbarkeit unbefriedigend und es werden zur Erzielung guter Zähigkeiten sehr hohe Verarbeitungstemperaturen benötigt. Ein weiterer Schwachpunkt der bekannten Formmassen ist die ungenügende Zähigkeit von Spritzgußteilen an der Angußstelle.

Es gibt Anhaltspunkte dafür, daß die Schwächen solcher Formmassen auf deren Mehrphasigkeit beruhen. Z.B. bestehen die Polycarbonate der EP 0 096 301 zu mindestens 80 Gew.-% aus Tetramethylbisphenol A, das die Herstellung einphasiger Mischungen ermöglicht (vgl. EP 0 096 301, Seite 12, Zeilen 4 bis 16 und Beispiele), jedoch wenig gebräuchlich (d.h. im Handel nicht erhältlich) und teurer ist als gewöhnliches Bisphenol A.

Aufgabe der vorliegenden Erfindung war es deshalb, Formmassen auf Basis von Polymermischungen, enthaltend Polycarbonat und Acrylsäureesterpfropfmischpolymerisate, zu entwickeln, die diese Nachteile nicht aufweisen. Insbesondere sollte das Verarbeitungsverhalten im Spritzguß und die Kerbschlagzähigkeit (nach DIN 53 453) verbessert werden. Ferner sollten die Zähigkeit von Formkörpern am Anguß angehoben und ein gutes gleichmäßiges Aussehen auch eingefärbter Formteile erreicht werden (keine Bindenahtmarkierungen).

Die genannte Aufgabe wird gelöst durch eine thermoplastische Formmasse aus, bezogen auf die Bestandteile A, B und C,

A: mindestens 10 Gew.% mindestens eines Polycarbonats auf der Grundlage von Bisphenol A,

B: 10 bis 50 Gew.% mindestens eines Pfropfmischpolymerisats B, gebildet aus

$b_1$: einer Pfropfgrundlage aus mindestens einem Elastomeren (Kautschuk) $b_1$, das 40 bis 80 Gew.%, bezogen auf B, ausmacht und erhalten wurde durch Polymerisation einer Monomermischung aus

$b_1a_1$: 70 bis 99,9 Gew.%, bezogen auf $b_1$, mindestens eines Alkylacrylats $b_1a_1$ mit 1 bis 8 Kohlenstoffatomen im Alkylrest,

$b_1a_2$: bis 30 Gew.%, bezogen auf b1, mindestens eines weiteren copolymerisierbaren monoethylenisch ungesättigten Monomeren $b_1a_2$ und

$b_1a_3$: 0,1 bis 5 Gew.%, bezogen auf $b_1$, eines copolymerisierbaren polyfunktionellen, vernetzenden Monomeren $b_1a_3$ und

$b_2$: einer Pfropfhülle, die 20 bis 60 Gew.%, bezogen auf B ausmacht und aufgebaut ist aus

$b_2a_1$: 50 bis 90 Gew.%, bezogen auf $b_2$, mindestens eines monoethylenisch ungesättigten aromatischen Kohlenwasserstoffs $b_2a_1$ mit bis zu 12 C-Atomen und

$b_2a_2$: 10 bis 50 Gew.% mindestens eines damit copolymerisierbaren ethylenisch ungesättigten Monomeren $b_2a_2$,

C: 10 bis 50 Gew.% eines mindestens ein vinylaromatisches Monomeres mit 8 bis 12 C-Atomen und Acrylnitril enthaltenden Copolymerisates C und

D: üblichen Zusatzstoffen D, deren Pfropfmischpolymerisat B erfindungsgemäß besteht aus

$B_1$: einem ersten, grobteiligen Pfropfmischpolymerisat $B_1$, das eine mittlere Teilchengröße von 200 bis 700 nm ($d_{50}$-Wert) der integralen Masseverteilung) aufweist, in einem Anteil von 30 bis 70 Gew.%, bezogen auf B, und

$B_2$: einem zweiten, feinteiligen Pfropfmischpolymerisat $B_2$, das eine mittlere Teilchengröße von 50 bis 180 nm ($d_{50}$-Wert der integralen Masseverteilung) aufweist, in einem Anteil von 70 bis 30 Gew.%, bezogen auf B.

Die Formmasse besteht vorzugsweise aus, jeweils bezogen auf A, B ($\Sigma B_1 + B_2$) + C, folgenden Anteilen der genannten Bestandteile:

A: mindestens 30 Gew.%, insbesondere 45 bis 70 Gew.%

B bzw. (B₁ + B₂): 15 bis 40 Gew.%, insbesondere 15 bis 30 Gew.%
C: 10 bis 40 Gew.%, insbesondere 15 bis 30 Gew.%.

Bezogen auf 100 Gew.-Teile der Formmasse aus A, B (ΣB₁ + B₂) und C, werden z.B. 0,1 bis 25 Gew.-Teile, vorzugsweise 0,1 bis 18 Gew.-Teile, an üblichen Zusatzstoffen D verwendet.

Komponente A

Die Polycarbonate (Komponente A) sind an sich bekannt.

Unter Polycarbonaten A im Sinne der erfindungsgemäßen Formmasse sollen Polycarbonate auf der Basis von Homopolycarbonaten und Copolycarbonaten verstanden werden. Als Bisphenole kommen dabei beispielsweise in Frage: Dihydroxidiphenyl, Bis-(hydroxyphenyl)alane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physiks auf Polycarbonales, Interscience Publishers, New York, 1964, in der US-PS 299 835 und in der DE-OS 2 248 817 beschrieben sind. Besonders bevorzugt sind Polycarbonate auf der Basis von Bisphenol A, nämlich 2,2-Bis-(4-hydroxyphenyl)propan. Die Synthese der Polycarbonate wird beispielsweise in der US-PS 2 999 835 und der GB-PS 772 627 beschrieben. Die Komponente A weist relative Viskositäten im Bereich von 1,1 bis 1,5 auf, entsprechend mittleren Molgewichten $\overline{M_w}$ im Bereich von 25 000 bis 200 000.

Komponente B

Die Komponente B (ΣB₁ + B₂) ist aufgebaut aus einem ersten grobteiligen Pfropfmischpolymerisat B₁ und einem zweiten feinteiligen Pfropfmischpolymerisat B₂. (Summe B₁ + B₂ = B).

Erfindungswesentlich ist, daß sich die beiden Komponenten B₁ und B₂ in ihrer Teilchengröße unterscheiden und im Gewichtsverhältnis von 70:30 bis 30:70 nebeneinander vorliegen. Bei stärker abweichendem Gewichtsverhältnis ergeben sich Formmassen, die solchen mit nur einer Pfropfkomponente B entsprechen und die eingangs geschilderten nachteiligen Eigenschaften wie geringe Kerbschlagzähigkeit und/oder schlechtes Aussehen von spritzgegossenen Formkörpern, aufweisen. Weitere Einzelheiten sind aus den Beispielen und den Vergleichsversuchen zu ersehen.

Der Aufbau und die Herstellung und die gemeinsame Anwendung sowohl des grobteiligen Pfropfmischpolymerisates B₁ der mittleren Teilchengröße von 200 bis 700 nm (d₅₀-Wert der integralen Masseverteilung) als auch des feinteiligen Pfropfmischpolymerisates B₂ der mittleren Teilchengröße von 50 bis 180 nm (d₅₀-Wert der integralen Masseverteilung) sind an sich bekannt (vgl. z.B. DE-OS 2 826 925).

Auch der einstufige (vgl. DE-OS 2 826 925) bzw. zweistufige Aufbau der Hülle von Pfropfmischpolymerisaten auf Basis von ASA (vgl. DE-OS 3 149 358 Komponente B; ferner DE-OS 3 414 118 Komponente B) sind an sich bekannt.

Aufbau von B₁ und B₂

Der chemische Aufbau der beiden Pfropfmischpolymerisate B₁ und B₂ ist vorzugsweise derselbe, obwohl die Hülle des grobteiligen Pfropfmischpolymerisates insbesondere auch zweistufig aufgebaut werden kann.

Somit werden B₁ und B₂ jeweils gebildet aus

b₁): mindestens einem Elastomeren (Kautschuk) b₁, das 40 bis 80 Gew.%, vorzugsweise 50 bis 75 Gew.%, bezogen auf B₁ ausmacht und erhalten wurde durch Polymerisation einer Monomermischung aus b₁a₁): 70 bis 99,9 Gew.%, bezogen auf b₁), mindestens eines Alkylacrylats b₁a₁ mit 1 bis 8 Kohlenstoffatomen im Alkylrest

b₁a₂): 0 bis 30 Gew.%, bezogen auf b₁), mindestens eines weiteren copolymerisierbaren monoethylenisch ungesättigten Monomeren b₁a₂ und

b₁a₃): 0,1 bis 5 Gew.%, bezogen auf b₁), eines copolymerisierbaren polyfunktionellen, vernetzenden Monomeren und

b₂: einer Pfropfhülle, die 20 bis 60 Gew.%, vorzugsweise 25 bis 50 Gew.%, bezogen auf B ausmacht udn aufgebaut ist aus

b₂a₁: 50 bis 90 Gew.%, bezogen auf b₂), mindestens einem monoethylenisch ungesättigten aromatischen Kohlenwasserstoff mit bis zu 12 C-Atomen und

b₂a₂: 10 bis 50 Gew.% mindestens einem damit copolymerisierbaren ethylenisch ungesättigten Monomeren.

Als Monomere für die Herstellung des Elastomeren b₁) kommen in Betracht:

b₁a₁) 70 bis 99,9 Gew.%, vorzugsweise 70 bis 99 Gew.%, bezogen auf b₁) eines Alkylacrylates mit 1 bis 8 C-Atomen im Alkylrest, vorzugsweise werden n-Butylacrylat und/oder 2-Ethyl-hexylacrylat angewendet, insbesondere m-Butylacrylat als alleiniges Alkylacrylat.

b₁a₂) Gegebenenfalls kann das elastomere Polymerisat b₁) auch noch bis zu 30, insbesondere 20 bis 30 Gew.%, jeweils bezogen auf b₁), eines weiteren copolymerisierbaren Monomeren b₁a₂), wie Butadien, Isopren, Styrol, Acrylnitril, Methylmethacrylat und/ oder Vinylmethylether enthalten.

b₁a₃) Um vernetzte Acrylsäureester-Polymerisate zu erhalten, wird die Polymerisation der Acrylsäureester in Gegenwart von 0,1 bis 5 Gew.%, vorzugsweise von 1 bis 4 Gew.%, bezogen auf die bei der Herstellung der Pfropfgrundlage eingesetzten gesamten Monomeren, eines copolymerisierbaren, polyfunktionellen, vorzugsweise bi-oder trifunktionellen, die Vernetzung bewirkenden Monomeren b₁a₃) durchgeführt. Als solche bi- oder polyfunktionellen Vernetzungs-Monomeren b₁a₃) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanat oder Triallylisocyanat. Als besonders günstiges Vernetzungsmonomeres hat sich der Acrylsäureester des Tricyclodecenylalkohols erwiesen (vgl. DE-PS 12 60 135).

Die Herstellung der Pfropfmischpolymerisate B₁ und B₂ kann beispielsweise nach der in der DE-PS 12 60 135 beschriebenen Methode erfolgen.

Der Aufbau der Pfropfhülle der Pfropfmischpolymerisate B₁ und B₂ kann ein- oder zweistufig erfolgen, wobei vorzugsweise das grobteilige Produkt B₁ zweistufig aufgebaut ist.

Im Falle des einstufigen Aufbaues der Pfropfhülle wird ein Gemisch der Monomeren b₂a₁) und b₂a₂) in dem gewünschten Gew.-Verhältnis im Bereich von 90:10 bis 65:35 in Gegenwart des Elastomeren b₁, in an sich bekannter Weise (vgl. z.B. DE-OS 28 26 925), vorzugsweise in Emulsion, polymerisiert.

Im Falle eines zweistufigen Aufbaus der Pfropfhülle b₂ macht die 1. Stufe 20 bis 70 Gew.%, vorzugsweise 25 bis 50 Gew.%, bezogen auf b₂), aus. Zu ihrer Herstellung werden nur monoethylenisch-ungesättigte aromatische Kohlenwasserstoffe mit bis zu 12 C-Atomen (b₂a₁) verwendet.

Die 2. Stufe der Pfropfhülle macht 30 bis 80 Gew.%, insbesondere 50 bis 75 Gew.%, jeweils bezogen auf b₂), aus. Zu ihrer Herstellung werden Mischungen aus den genannten monoethylenisch ungesättigten aromatischen Kohlenwasserstoffen b₂a₁) und monoethylenisch ungesättigten Monomeren b₂a₂) im Gewichtsverhältnis b₂a₁)/b₂a₂) von 90:10 bis 60:40, insbesondere 80:20 bis 70:30 angewendet.

Als monoethylenisch ungesättigte vinylaromatische Monomere b₂a₁) mit bis zu 12 Kohlenstoffatomen kommen z.B. in Betracht Styrol, α-Methylstyrol und kernalkylierte Styrole, wie p-Methylstyrol und tert.-Butylstyrol oder deren Mischung. Besonders bevorzugt werden Styrol, α-Methylstyrol und p-Methylstyrol eingesetzt.

Als monoethylenisch ungesättigtes copolymerisierbares Monomere b₂a₂) sind Acrylnitril, (Meth)-Acrylsäurealkylester mit 1 bis 4 Kohlenstoffatomen im Alkylrest, Acrylsäure, Maleinsäureanhydrid, Acrylamid und/oder Vinylmethylether, Maleinsäureanhydrid, Acrylamid, Vinylmethylether und deren Mischungen zu nennen. Besonders bevorzugt werden Acrylnitril, Ethylacrylat, Methylmethacrylat und Gemische aus diesen angewendet. Als besonders bevorzugte Monomeren-Gemische werden vor allem Styrol und Acrylnitril, α-Methylstyrol und Acrylnitril und Styrol, Acrylnitril und Methylmethacrylat eingesetzt.

Insbesondere werden beim ein- oder zweistufigen Aufbau der Pfropfhülle b₂ in beiden Pfropfmischpolymerisaten B₁ und B₂ nur Styrol und Acrylnitril im Gewichtsverhältnis von 65:35 bis 90:10, vorzugsweise von 70:30 bis 85:15 angewendet.

Die bei der Herstellung der Pfropfmischpolymerisate B₁ und B₂ entstehenden, nicht gepfropften Anteile an (Co)polymerisaten aus den Pfropfmonomeren b₂a₁) und/oder b₂a₂) werden im Sinne der vorliegenden Erfindung den Komponenten B₁ und B₂ zugerechnet.

Die Bedingungen der Pfropfmischpolymerisation sind so zu wählen, daß Teilchengrößen in den genannten Bereichen resultieren. Maßnahmen hierzu sind bekannt und z.B. in der DE-PS 12 60 135 und der DE-OS 28 26 925 beschrieben.

Komponente C

Zusätzlich zu der Komponente A und den beiden Pfropfmischpolymerisaten B₁ + B₂ enthalten die erfindungsgemäßen Formmassen als weitere Komponente C eine Hartkomponente (Harz) aus einem oder mehreren Copolymerisaten aus mindestens einem vinylaromatischen Monomeren mit 8 bis 12 C-Atomen und Acrylnitril. Der Acrylnitril-Gehalt in diesen Copolymerisaten der Hartkomponente C soll 18 bis 40 Gew.%, vorzugsweise 20 bis 36 Gew.%, bezogen auf das Copolymerisat betragen. Zu dieser Hartkomponente C zählen nicht die bei der Pfropfmischpolymerisation zur Herstellung der Komponente B entstehenden freien, nicht gepfropften Styrol und Acrylnitril enthaltenden Copolymerisate.

Bei dieser Hartkomponente C kann es sich um ein Styrol/Acrylnitril-Copolymerisat, ein α-Methylstyrol/Acrylnitril-Copolymerisat oder ein α-Methylstyrol/Styrol/Acrylnitril-, ein Styrol/Acrylnitril/Methylmethacrylat-, ein Styrol/Acrylnitril/Maleinsäureanhydrid oder ein Styrol/Acrylnitril/Acrylsäure-Terpolymerisat, bzw. ein α-Methylstyrol/Styrol/Acrylnitril-Terpolymerisat handeln. Diese Copolymerisate können einzeln oder auch in Mischung miteinander eingesetzt werden, so daß es sich bei der Hartkomponente C der erfindungsgemäßen Mischungen beispielsweise um eine Mischung aus einem Styrol/Acrylnitril-Copolymerisat und einem α-Methylstyrol/Acrylnitril-Copolymerisat handeln kann. In dem Fall, in dem die

4

Hartkomponenten C der erfindungsgemäßen Massen aus einer Mischung von einem Styrol/Acrylnitril-Copolymerisat und einem α-Methylstyrol/Acrylnitril-Copolymerisat besteht, soll der Acrylnitrilgehalt der beiden Copolymerisate tunlichst nicht mehr als 10 Gew.%, vorzugsweise nicht mehr als 5 Gew.%, bezogen auf das Copolymerisat, voneinander abweichen.

Die Hartkomponente C der erfindungsgemäßen Formmassen besteht jedoch vorzugsweise aus einem Styrol/Acrylnitril- und/oder einem α-Methylstyrol/Acrylnitril- und/oder einem p-Methylstyrol/Acrylnitril-Copolymerisat.

Die Hartkomponente C kann nach den herkömmlichen Methoden erhalten werden. So kann die Copolymerisation des Styrols und/oder α-Methylstyrols und/oder p-Methylstyrols mit dem Acrylnitril in Masse, Lösung, Suspension oder wäßriger Emulsion durchgeführt werden. Die Hartkomponente C hat vorzugsweise eine Viskositätszahl von 40 bis 100, insbesondere von 50 bis 80.

Komponente D

Die erfindungsgemäße Formmasse kann als Komponente D Zusatzstoffe enthalten, die für Polycarbonate, SAN-Polymerisate und Pfropfmischpolymerisate auf Basis von ASA oder deren Mischungen typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen erforderlich sind. Von den Schmiermitteln sind insbesondere diejenigen auf Basis von Ethylen- und Propylenoxid aufgebauten Pluriole® zu nennen, die bevorzugt angewendet werden, um die Verarbeitungseigenschaften der Formmassen auf einem hohen Niveau zu halten.

Als Flammschutzmittel können insbesondere die in der deutschen Patentanmeldung P 34 36 815.9 genannten Mittel verwendet werden, wobei insbesondere der Poly(tetrabrombisphenol-A-Glycidyl)ether mit einem Molgewicht von 40.000 bevorzugt wird (Produkt F 2400® von Makhtheshim).

Herstellung der Formmasse

Das Mischen der Komponenten A, $B_1$, $B_2$, C und gegebenenfalls D kann nach allen bekannten Methoden erfolgen. Vorzugsweise geschieht jedoch das Mischen der Komponenten A, $B_1$, $B_2$ und C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponenten $B_1$ und $B_2$) können aber auch teilweise entwässert oder direkt als Dispersion mit der Komponente C und dann mit dem Polycarbonat A, und der Komponente D, vermischt werden, wobei dann während des Vermischens die vollständige Trocknung des Pfropfmischpolymerisates erfolgt.

Die Herstellung der Formmasse erfolgt z.B. dadurch, daß eine Schmelze der harten Polymerisate, Komponente A und Komponente C mit den Pfropfmischpolymerisaten $B_1$ und $B_2$ bei Temperaturen über 200°C intensiv vermischt wird. Sie erfolgt, um eine besonders homogene Verteilung der Weichphase in der Hartmatrix zu erzielen, bevorzugt dadurch, daß man in die Schmelze der Polycarbonate (Komponente A), z.B. in einem Extruder mit Vakuumentgasung die gefällten Pfropfmischpolymerisate $B_1$ und $B_2$, die einen Restwassergehalt von 10 bis 40 Gew.% aufweisen, bei Temperaturen über 180°C einbringt und intensiv vermischt. Man kann die Schmelze der beiden Hartkomponenten A und C auch direkt mit einer Dispersion der Pfropfmischpolymerisate, die einen Feststoffgehalt von 30 bis 60 Gew.% aufweisen, bei Temperaturen über 180°C intensiv vermischen.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellten Formmassen Formteile durch Spritzgießen für den Automobilbau hergestellt.

Die in der vorliegenden Anmeldung beschriebenen Parameter können wie folgt bestimmt werden:

1. die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen können neben dem $d_{50}$-Wert (mittlerer Teilchendurchmesser) die sich aus der integralen Massenverteilung ergebenden $d_{10}$-und $d_{90}$-Werte herangezogen werden. Der $d_{10}$- bzw. $d_{50}$-Wert der integralen Massen-

verteilung ist dabei entsprechend dem $d_{50}$-Wert definiert mit dem Unterschied, daß sie auf 10 bzw. 90 Gew.% der Teilchen bezogen sind. Der Quotient

$$\frac{d_{90} - d_{10}}{d_{50}} = Q$$

stellt ein Maß für die Verteilungsbreite der Teilchengröße dar.

2. Die Kerbschlagzähigkeit $a_k$ in [kJ/m²] der Proben wurde nach DIN 53 453 an bei 260°C gespritzten Normkleinstäben bei 23°C gemessen.

3. Die Bruchenergie $W_{50}$ (Nm), wurde bei -40°C gemäß DIN 53 443 an ebenfalls bei 260°C gespritzten Normkleinstäben gemessen.

4. a) Die Viskositätszahl (VZ) des eingesetzten Polycarbonats wurde in einer 0,5 %igen Lösung in Methylenchlorid bei 23°C gemessen;
b) die der SAN-Copolymerisate in 0,5 %iger Lösung in Dimethylformamid bei 23°C.

5. Die Durchstoßarbeit am Anguß $DSA_{Anguß}$ (Nm), wurde nach DIN 53 453 an 2 mm dicken 60 × 60 mm quadratischen Platten, die aus einem größeren bei 280°C gespritzten Plattenteil um die Angußstelle ausgesägt worden waren, bestimmt. Die Prüfung erfolgte bei Raumtemperatur, der Schlag auf die Angußseite.

6. Der Farbeindruck wurde visuell an mit 1 % Ruß (Black Pearl) schwarz eingefärbten bei 280°C gespritzten Testkästchen ermittelt. Beurteilt wurde die Gleichmäßigkeit des Farbeindrucks. Dabei bedeuten:
2 = gleichmäßige Einfärbung, keine Fließlinien sehr geringes Changieren im Schwarz
3 = gleichmäßige Einfärbung, aber etwas stärkeres Changieren des Farbtons
4 = ungleichmäßiger Farbeindruck durch sehr starkes Changieren des Farbtons
5 = ungleichmäßiger Farbeindruck durch Fließmarkierungen.

Für die Herstellung erfindungsgemäßer Formmassen und Massen für Vergleichsversuche wurden die nachfolgend beschriebenen Produkte verwendet.

Komponente A

Als Komponente A wurden handelsübliche Polycarbonate auf Basis von Bisphenol A, Lexan® oder Makrolon®, mit einer relativen Viskosität (gemessen in 0,5 %iger Lösung in Methylenchlorid) von 1,30 ml/g (A.1) bzw. an 1,33 ml/g (A-2) eingesetzt.

Komponente B

Als Komponente B wurden die im folgenden beschriebenen Pfropfmischpolymerisate eingesetzt.

(a) Herstellung des feinteiligen Pfropfmischpolymerisats $B_2$

($a_1$) 16 Teile Butylacrylat und 0,4 Teile Tricyclodecenylacrylat werden in 150 Teilen Wasser unter Zusatz von einem Teil des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minute nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Die mittlere Teilchengröße (Gewichtsmittel) wurde zu 76 nm ermittelt. Die Teilchengrößenverteilung war eng (Quotient Q = 0,29).

($a_2$) 150 Teile des nach ($a_1$) erhaltenen Polybutylacrylat-Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.

(b) Herstellung eines grobteiligen Pfropfmischpolymerisats (B1-1)

($b_1$) Zu einer Vorlage aus 2,5 Teilen des in der Stufe ($a_1$) dieser Vorschrift hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von

0,5 Teilen des Natriumsalzes einer $C_{12}$- Bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 288 nm ermittelt. Die Teilchengrößenverteilung war eng (Q = 0,1).

(b₂) 150 Teile dieses Latex wurden mit 40 Teilen einer Mischung aus Styrol und Acrylnitril (Verhältnis 75:25) und 110 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Das bei der Pfropfmischpolymerisation erhaltene Polymerisationsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 27 % ermittelt, die mittlere Teilchengröße betrug 330 nm.

(c) Herstellung eines grobteiligen Pfropfmischpolymerisats (B1-2)

(c₁) Zu einer Vorlage aus 1,5 Teilen des in der Stufe (a₁) dieses Beispiels hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt. Die Teilchengrößenverteilung war eng (Q = 0,1).

(c₂) 150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylproxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgad des Pfropfmischpolymerisats wurde zu 35 % ermittelt; die mittlere Teilchengröße der Latexteilchen betrug 510 nm.

(d) Herstellung eines grobteiligen Pfropfmischpolymerisats (B1-3)

(d₁) Es wurde ein Latex, wie in (c₁) beschrieben, hergestellt.

(d₂) 175 Teile dieses Latex wurden mit 30 Teilen einer Mischung aus Styrol mit Acrylnitril (Verhältnis 85:15) und 95 Teilen Wasser gemischt und unter Rühren nach Zusatz von weiteren 0,03 Teilen Kaliumpersulfat und 0,05 Teilen Lauroylperoxid weitere 4 Stunden polymerisiert. Das Reaktionsprodukt wurde dann mittels Calciumchloridlösung bei 95°C aus der Dispersion ausgefällt, abgetrennt, mit Wasser gewaschen und getrocknet. Der Pfropfgrad des Pfropfmischpolymerisats wurde zu 25 % ermittelt; die mittlere Teilchengröße der Latexteilchen betrug 480 nm.

Komponente C

C-1 Ein Monomerengemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 % und eine Viskositätszahl von 80 ml/g.

C-2 Es wurde ein auf gleiche Art wie C-1 hergestelltes S/AN-Copolymerisat mit 25 Gew.% AN-Gehalt und einer Viskositätszahl von 85 ml/g eingesetzt.

C-3 Es wurde ein analog hergestelltes Copolymerisat aus α-Methylstyrol und Acrylnitril mit 30 % AN und einer Viskositätszahl von 55 ml/g eingesetzt.

Die Erfindung wird durch die nachfolgenden Beispiele näher erläutert. Die in den Beispielen genannten Teile und Prozente beziehen sich, sofern nicht anders angegeben, auf das Gewicht.

Beispiele 1 bis 12 und Vergleichsversuche A bis E

Die in der Tabelle angegebenen Gewichtsteile der Komponenten A, B (B₁+B₂) und C wurden in trockener Form mit zusätzlich jeweils 0,5 Teilen ⍟Pluriol PE 3100, einem linearen aus Ethylenoxid (10 Gew.%) und Propylenoxid (90 Gew.%) aufgebauten Dreiblock-Copolymerisat XYX, mit einer molaren Masse des Y-Blocks von 950 auf einem Fluidmischer gemischt und bei 250°C auf einen Doppelschneckenextruder, z.B. ZSK-Typ von Werner & Pfleiderer, extrudiert. Aus dem getrockneten Granulat der Proben wurden die Formmassen für die Eigenschaftsprüfungen durch Spritzgießen hergestellt. Die Einfärbung mit Ruß erfolgte durch Sekundärkonfektionierung mit 5 Teilen eines 20 %igen Rußbatchs in PSAN.

## Tabelle

| Beispiele | | A-1 | A-2 | B1-1 | Mischung B1-2 | B1-3 | B2 | C-1 | C-2 | C-3 | $a_K$ (RT) | $W_{50}$ ($-40^0$C) | $DSA_{Anguß}$ | Farb-eindruck |
|---|---|---|---|---|---|---|---|---|---|---|---|---|---|---|
| Vergleich | A | 60 | - | 20 | - | - | - | 20 | - | - | 35 | 25 | 7 | 4 |
| | B | 60 | - | - | 20 | - | - | 20 | - | - | 34 | 20 | 6 | 4 |
| | C | - | 60 | - | - | 20 | - | - | 20 | - | 48 | 45 | 5 | 4 |
| | D | - | 60 | - | - | - | 20 | 20 | - | - | 65 | 55 | 10 | 5 |
| | E | - | 60 | - | 20 | - | - | - | 20 | - | 58 | 32 | 7 | 4 |
| Beispiel | 1 | 60 | - | 10 | - | - | 10 | 20 | - | - | 48 | 56 | 16 | 2 |
| | 2 | 60 | - | - | 10 | - | 10 | 20 | - | - | 50 | 60 | 15 | 2 |
| | 3 | - | 60 | 14 | - | - | 6 | 20 | - | - | 40 | 50 | 14 | 3 |
| | 4 | - | 60 | - | 7 | - | 13 | 20 | - | - | 55 | 65 | 16 | 2 |
| | 5 | - | 60 | - | - | 10 | 10 | 20 | - | - | 57 | 58 | 17 | 2 |
| | 6 | - | 60 | - | - | 7 | 13 | - | 20 | - | 63 | 65 | 18 | 2 |
| | 7 | 60 | - | 10 | - | - | 10 | - | 20 | - | 60 | 65 | 16 | 2 |
| | 8 | 60 | - | - | 10 | - | 10 | - | 20 | - | 59 | 63 | 17 | 2 |
| | 9 | 45 | - | - | 15 | - | 15 | 25 | - | - | 45 | 35 | 16 | 2 |
| | 10 | 70 | - | - | 7,5 | - | 7,5 | 15 | - | - | 58 | 60 | 12 | 2 |
| | 11 | 60 | - | - | 10 | - | 10 | 15 | - | 20 | 64 | 60 | 15 | 2 |
| | 12 | 60 | - | 10 | - | - | 10 | 15 | 10 | 10 | 59 | 57 | 14 | 2 |

EP 0 244 856 B1

**Patentansprüche**

1. Thermoplastische Formmasse aus, bezogen auf die Bestandteile A, B und C,

A: mindestens 10 Gew.% mindestens eines Polycarbonats auf der Grundlage von Bisphenol A,

B: 10 bis 50 Gew.% mindestens eines Pfropfmischpolymerisats B, gebildet aus

$b_1$: einer Pfropfgrundlage aus mindestens einem Elastomeren (Kautschuk) $b_1$, das 40 bis 80 Gew.%, bezogen auf B, ausmacht und erhalten wurde durch Polymerisation einer Monomermischung aus

$b_1a_1$: 70 bis 99,9 Gew.%, bezogen auf $b_1$, mindestens eines Alkylacrylats $b_1a_1$ mit 1 bis 8 Kohlenstoffatomen im Alkylrest,

$b_1a_2$: bis 30 Gew.%, bezogen auf $b_1$, mindestens eines weiteren copolymerisierbaren monoethylenisch ungesättigten Monomeren $b_1a_2$ und

$b_1a_3$: 0,1 bis 5 Gew.%, bezogen auf $b_1$, eines copolymerisierbaren polyfunktionellen, vernetzenden Monomeren $b_1a_3$ und

$b_2$: einer Pfropfhülle, die 20 bis 60 Gew.%, bezogen auf B ausmacht und aufgebaut ist aus

$b_2a_1$: 50 bis 90 Gew.%, bezogen auf $b_2$, mindestens eines monoethylenisch ungesättigten aromatischen Kohlenwasserstoffs $b_2a_1$ mit bis zu 12 C-Atomen und

$b_2a_2$: 10 bis 50 Gew.% mindestens eines damit copolymerisierbaren ethylenisch ungesättigten Monomeren $b_2a_2$,

C: 10 bis 50 Gew.% mindestens eines thermoplastischen, mindestens ein vinylaromatisches Monomeres mit 8 bis 12 C-Atomen und Acrylnitril enthaltenden Copolymerisats C und

D: übliche Zusatzstoffen D, dadurch gekennzeichnet, daß das Pfropfmischpolymerisat B besteht aus

$B_1$: einem ersten, grobteiligen Pfropfmischpolymerisat $B_1$, das eine mittlere Teilchengröße von 200 bis 700 nm ($d_{50}$-Wert der integralen Masseverteilung) aufweist, in einem Anteil von 30 bis 70 Gew.%, bezogen auf B, und

$B_2$: einem zweiten, feinteiligen Pfropfmischpolymerisat $B_2$, das eine mittlere Teilchengröße von 50 bis 180 nm ($d_{50}$-Wert der integralen Masseverteilung) aufweist, in einem Anteil von 70 bis 30 Gew.%, bezogen auf B.

2. Thermoplastische Formmasse nach Anspruch 1 aus, bezogen auf die Bestandteile A, B und C, mindestens 30 Gew.% Polycarbonat A, 15 bis 40 Gew.% Pfropfmischpolymerisat B und 10 bis 40 Gew.% Copolymerisat C.

3. Thermoplastische Formmasse nach Anspruch 1 aus, bezogen auf die Bestandteile A, B und C, 45 bis 70 Gew.% Polycarbonat A, 15 bis 30 Gew.% Pfropfmischpolymerisat B und 15 bis 30 Gew.% eines thermoplastischen Copolymerisats C aus, bezogen auf C, 82 bis 60 Gew.% Styrol und 18 bis 40 Gew.% Acrylnitril.

4. Thermoplastische Formmasse nach einem der Ansprüche 1 bis 3, dadurch gekennzeichnet, daß das erste, grobteilige Pfropfmischpolymerisat $B_1$ eine Pfropfhülle enthält, die durch Polymerisation eines Gemisches der Monomeren $b_2a_1$ und $b_2a_2$ in Gegenwart des Elastomeren $b_1$ erhalten wird (einstufige Hülle).

5. Thermoplastische Formmasse nach Anspruch 1 mit der Abänderung, daß das erste, grobteilige Pfropfmischpolymerisat $B_1$ eine Pfropfhülle $b_2$ enthält, die durch sukzessive Polymerisation von

$b_2a_1$: in der ersten Verfahrensstufe, 20 bis 70 Gew.%, bezogen auf $b_2$, mindestens einem monoethylenisch ungesättigten aromatischen Kohlenwasserstoff mit bis zu 12 C-Atomen, in Gegenwart des Elastomeren $b_1$ und von,

$b_2a_2$: in einer zweiten Verfahrensstufe, 30 bis 80 Gew.%, bezogen auf $b_2$, einem Gemisch aus mindestens einem monoethylenisch ungesättigten aromatischen Kohlenwasserstoff mit bis zu 12 Kohlenstoffatomen und mindestens einem damit copolymerisierbaren ethylenisch ungesättigten Monomeren im Gewichtsverhältnis von 90:10 bis 60:40.

in Gegenwart des Pfropfproduktes der ersten Verfahrensstufe erhalten wird (zweistufige Pfropfhülle).

**Claims**

1. A thermoplastic molding material comprising, based on components A, B and C,

A: at least 10% by weight of one or more polycarbonates based on bisphenol A,

B: from 10 to 50% by weight of one or more graft copolymers B formed from

$b_1$: a grafting base of one or more elastomers (rubbers) $b_1$ which account for from 40 to 80% by weight, based on B, and have been obtained by polymerizing a monomer mixture of

$b_1a_1$: from 70 to 99.9% by weight, based on $b_1$, of one or more alkyl acrylates $b_1a_1$ where alkyl is of 1 to 8 carbon atoms

$b_1a_2$: up to 30% by weight, based on $b_1$, of one or more further copolymerizable monoethylenically unsaturated monomers $b_1a_2$ and

$b_1a_3$: from 0.1 to 5% by weight, based on $b_1$, of a copolymerizable polyfunctional crosslinking monomer $b_1a_3$, and

$b_2$: a graft sheath accounting for from 20 to 60% by weight, based on B, and being based on

$b_2a_1$: from 50 to 90% by weight, based on $b_2$, of one or more monoethylenically unsaturated aromatic hydrocarbons $b_2a_1$ of up to 12 carbon atoms and

$b_2a_2$: from 10 to 50% by weight of one or more ethylenically unsaturated monomers $b_2a_2$ copolymerizable therewith,

C: from 10 to 50% by weight of one or more thermoplastic copolymers containing one or more vinylaromatic monomers of 8 to 12 carbon atoms and acrylonitrile C, and wherein customary additives D composed of

$B_1$: a first, coarsely divided graft copolymer the graft copolymer B is $B_1$ which has a median particle size of from 200 to 700 nm ($d_{50}$ value of cumulative molecular weight distribution) in a proportion of from 30 to 70% by weight, based on B, and

$B_2$: a second, finely divided graft copolymer $B_2$ which has a median particle size of from 50 to 180 nm ($d_{50}$ value of cumulative molecular weight distribution) in a proportion of from 70 to 30% by weight, based on B.

2. A thermoplastic molding material as claimed in claim 1, comprising, based on components A, B and C at least 30% by weight of polycarbonate A, from 15 to 40% by weight of graft copolymer B and from 10 to 40% by weight of copolymer C.

3. A thermoplastic molding material as claimed in claim 1, comprising, based on components A, B and C, from 45 to 70% by weight of polycarbonate A, from 15 to 30% by weight of graft copolymer B and from 15 to 30% by weight of a thermoplastic copolymer C, and, based on C, from 82 to 60% by weight of styrene and from 18 to 40% by weight of acrylonitrile.

4. A thermoplastic molding material as claimed in any one of claims 1 to 3, wherein the first, coarsely divided graft copolymer $B_1$ contains a graft sheath which is obtained by polymerizing a mixture of monomers $b_2a_1$ and $b_2a_2$ in the presence of elastomer $b_1$ (one stage sheath).

5. A thermoplastic molding material as claimed in claim 1, with the modification that the first, coarsely divided graft copolymer $B_1$ contains a graft sheath $b_2$ wich is obtained by successive polymerization of

$b_2a_1$: in the first stage, from 20 to 70% by weight, based on $b_2$, of one or more monoethylenically unsaturated aromatic hydrocarbons of up to 12 carbon atoms, in the presence of elastomer $b_1$, and of

$b_2a_2$: in a second stage, from 30 to 80% by weight, based on $b_2$, of a mixture of one or more monoethylenically unsaturated aromatic hydrocarbons of up to 12 carbon atoms and one or more ethylenically unsaturated monomers copolymerizable therewith, in a weight ratio of from 90:10 to 60:40, in the presence of the graft product of the first stage (two-stage graft sheath).

**Revendications**

1. Matière à mouler thermoplastique constituée de, par rapport aux composants A, B et C,

A: au moins 10% en poids d'au moins un polycarbonate à base de bisphénol A,

B: 10 à 50% en poids d'au moins un copolymère de greffage B, formé de

$b_1$: une base de greffage d'au moins un élastomère (caoutchouc) $b_1$, qui constitue de 40 à 80% en poids, par rapport à B et que l'on obtient par la polymérisation d'un mélange de monomères constitué

$b_1a_1$: de 70 à 99,9% en poids, par rapport à $b_1$, d'au moins un acrylate d'alkyle $b_1a_1$ dont le radical alkyle comporte de 1 à 8 atomes de carbone,

$b_1a_2$: de jusqu'à 30% en poids, par rapport à $b_1$, d'au moins un monomère $b_1a_2$ à insaturation monoéthylénique, copolymérisable, supplémentaire et

$b_1a_3$: de 0,1 à 5% en poids, par rapport à $b_1$, d'un monomère $b_1a_3$ réticulant, polyfonctionnel, copolymérisable et

$b_2$: une gaine ou enveloppe de greffage qui constitue de 20 à 60% en poids, par rapport à B et se compose de

$b_2a_1$: 50 à 90% en poids, par rapport à $b_2$, d'au moins un hydrocarbure $b_2a_1$ aromatique, à insaturation monoéthylénique, comportant jusqu'à 12 atomes de carbone et

$b_2a_2$: 10 à 50% en poids d'au moins un monomère $b_2a_2$ à insaturation éthylénique, copolymérisable avec l'hydrocarbure,

C: 10 à 50% en poids d'au moins un copolymère C contenant de l'acrylonitrile et au moins un monomère vinylaromatique qui comporte de 8 à 12 atomes de carbone, thermoplastique et

D: des additifs D usuels, caractérisée en ce que le copolymère de greffage B se compose de

$B_1$: un premier copolymère de greffage $B_1$, à particules grossières, qui présente une granulométrie moyenne de 200 à 700 nm (valeur $d_{50}$ de la répartition massique intégrale), en une proportion de 30 à 70% en poids, par rapport à B et

$B_2$: un second copolymère de greffage $B_2$, à fines particules, qui possède une granulométrie moyenne de 50 à 180 nm (valeur $d_{50}$ de la répartition massique intégrale), en une proportion de 70 à 30% en poids, par rapport à B.

2. Matière à mouler thermoplastique suivant la revendication 1, constituée de, par rapport aux composants A, B et C, au moins 30% en poids de polycarbonate A, 15 à 40% en poids de copolymère de greffage D et 10 à 40% en poids de copolymère C.

3. Matière à mouler thermoplastique suivant la revendication 1, constituée de, par rapport aux composants A, B et C, 45 à 70% en poids de polycarbonate A, 15 à 30% en poids de copolymère de greffage B et 15 à 30% en poids d'un copolymère thermoplastique C, formé de, par rapport à C, 82 à 60% en poids de styrène et 18 à 40% en poids d'acrylonitrile.